# EUROPEAN PATENT APPLICATION

(11) **EP 3 786 898 A1**
(43) Date of publication of application: **03.03.2021**
(21) Application number: 20193133.4
(22) Date of filing: 27.08.2020
(51) Int. Cl.: G06T 11/20

(54) **DISPLAY PROCESSING DEVICE, DISPLAY PROCESSING METHOD AND STORAGE MEDIUM**

(30) Priority: 27.08.2019 JP 2019154717
(71) Applicant: TOYOTA JIDOSHA KABUSHIKI KAISHA, TOYOTA-SHI, AICHI-KEN 471-8571 (JP)
(72) Inventor: KIMURA, Yosuke, TOYOTA-SHI, AICHI-KEN, 471-8571 (JP); OBUCHI, Tatsuya, TOYOTA-SHI, AICHI-KEN, 471-8571 (JP); FUJIMORI, Masaya, TOYOTA-SHI, AICHI-KEN, 471-8571 (JP); MORIAI, Takeo, TOYOTA-SHI, AICHI-KEN, 471-8571 (JP); MAJIMA, Hiroshi, TOYOTA-SHI, AICHI-KEN, 471-8571 (JP)
(74) Representative: Cabinet Beau de Loménie

(57) **Abstract**

There is provided a display processing device (20) to enable a user to more readily design a maintenance plan according to the type of an abnormality of road. A first abnormal section that is a road section having a road condition of a first abnormality and a second abnormal section that is a road section having the road condition of a second abnormality that is different from the first abnormality are detected, based on vehicle information from a plurality of vehicles. Out of roads in a displayed map, the first abnormal section is provided with the state information in a first display mode, and the second abnormal section is provided with the state information in a second display mode that is different from the first display mode. The first abnormal section and the second abnormal section provided with the state information are displayed in a display device (43).

## Description

### Technical Field

The present disclosure relates to display processing device, a display processing method and a storage medium.

### Background

A proposed configuration of a display processing device generates information that correlates state information (for example, trouble information) indicating the condition of a road surface in each of taken images of areas including the road surface to position information indicating the position of the road surface and causes a displayed image that correlates each position in a map specified by the position information to state information indicating the condition of the road surface at the position to be displayed in a display device (as described in, for example, JP 2018-17102A).

### Citation List

### Patent Literature

PTL 1: JP2018-17102A

### Summary

A user (for example, a person in charge of a government office) can recognize a road section having an abnormal road condition by checking the displayed image described above. It is, however, difficult to identify the type of the abnormality. It is accordingly difficult for the user to design a maintenance plan (for example, a repair plan of the road surface) or the like according to the type of the abnormality.

A main object of a display processing device, a display processing method and a storage medium according to the present disclosure is to enable the user to more readily design a maintenance plan or the like according to the type of an abnormality of the road.

In order to achieve the above primary object, the display processing device, a display processing method and a storage medium of the present disclosure employs the following configuration.

The present disclosure is directed to a display processing device, a display processing method and a storage medium. The display processing device provides each of roads in a displayed map that is a map in a displayed range, with state information with regard to a road condition and to cause the road provided with the state information to be displayed in a display device. The display processing device includes a road condition detector configured to detect a first abnormal section that is a road section having a road condition of a first abnormality and a second abnormal section that is a road section having the road condition of a second abnormality that is different from the first abnormality, based on vehicle information from a plurality of vehicles and a display processor configured to provide the first abnormal section with the state information in a first display mode and provide the second abnormal section with the state information in a second display mode that is different from the first display mode, out of the roads in the displayed map and to cause the first abnormal section and the second abnormal section provided with the state information to be displayed in the display device.

The display processing device according to this aspect of the present disclosure detects the first abnormal section that is the road section having the road condition of the first abnormality and the second abnormal section that is the road section having the road condition of the second abnormality that is different from the first abnormality, based on vehicle information from the plurality of vehicles. The display processing device then provides the first abnormal section with the state information in the first display mode and provide the second abnormal section with the state information in the second display mode that is different from the first display mode, out of the roads in the displayed map, and causes the first abnormal section and the second abnormal section provided with the state information to be displayed in the display device. This configuration enables a user (for example, a person in charge of a government office) to readily distinguish between the first abnormal section and the second abnormal section and to more readily design a maintenance plan (for example, a repair plan of the road surface) or the like according to the type of the abnormality of the road. In the description hereof, roads include not only public roads (roads and sidewalks) but private roads and parking places (for example, walkways).

The display processor may provide a part where a number of the second abnormal sections present in a predetermined distance is larger than a first predetermined number or a part where a number of consecutive second abnormal sections is larger than a second predetermined number, with the state information in a third display mode that is different from the first display mode and the second display mode, out of the roads in the displayed map and to cause either of the parts provided with the state information to be displayed in the display device. This configuration enables the user to recognize the part where the number of second abnormal sections present in the predetermined distance is larger than the first predetermined number or the part where the number of consecutive second abnormal sections is larger than the second predetermined number.

The road condition detector may detect a normal section that is a road section having a normal road condition, based on the vehicle information. The display processor may provide the normal section with the state information in a fourth display mode that is different from the first display mode and the second display mode, out of the roads in the displayed map and to cause the normal section provided with the state information to be displayed in the display device. This configuration enables the user to recognize a road section that is none of the normal section, the first abnormal section and the second abnormal section (road section that is not subjected to estimation of the road condition).

The display processor may provide an overlapped abnormal section that is a road section specified as both the first abnormal section and the second abnormal section, with the state information in the first display mode and the second display mode or in a fifth display mode that is different from the first display mode and the second display mode, out of the roads in the displayed map and to cause the overlapped abnormal section provided with the state information to be displayed in the display device. This configuration enables the user to recognize the overlapped abnormal section.

The first abnormality may be a rough road surface, and the second abnormality may be a pothole. This configuration enables the user to readily distinguish between a road section having rough road surface and a road section having potholes. In this aspect, when an average value of a wheel speed variation rate that is a variation in wheel speed per unit time with regard to the plurality of vehicles, is equal to or higher than a first variation rate, the road condition detector may determine that the road condition of each road section is the state of the first abnormality. When a maximum value of the wheel speed variation rate with regard to the plurality of vehicles is equal to or higher than a second variation rate that is larger than the first variation rate, the road condition detector may determine that the road condition of each road section is the state of the second abnormality.

The second abnormality may be an abnormality that a hole deeper than a predetermined depth is formed in a road surface. This configuration enables the user to readily distinguish between a road section having the abnormality that a hole deeper than the predetermined depth is formed in the road surface and a road section having other abnormality. In this aspect, when a maximum value of the wheel speed variation rate that is a variation in wheel speed per unit time with regard to the plurality of vehicles, is equal to or higher than a first variation rate but is lower than a second variation rate that is larger than the first variation rate, the road condition detector may determine that the road condition of each road section is the state of the first abnormality. When the maximum value of the wheel speed variation rate with regard to the plurality of vehicles is equal to or higher than the second variation rate, the road condition detector may determine that the road condition of each road section is the state of the second abnormality.

The first abnormality may be an abnormality in a road section that is paved with a first paving material. The second abnormality may be an abnormality in a road section that is paved with a second paving material that is different from the first paving material. This configuration enables the user to readily distinguish between a road section that is paved with the first paving material and that is abnormal and a road section that is paved with the second paving material and that is abnormal. The first paving material is a primarily used paving material, for example, asphalt, and the second paving material is a paving material other than the primarily used paving material, for example, concrete, sheet iron, stones or bricks.

The first abnormality may be an abnormality of a road surface. The second abnormality may be an abnormality that an obstacle is present. This configuration enables the user to readily distinguish between a road section having abnormal road surface and a road section having abnormality that an obstacle is present.

The second abnormality may be an abnormality that a readily removable obstacle is present. This configuration enables the user to readily distinguish between a road section having abnormality that a readily removable obstacle is present and a road section having any other abnormality. Examples of the readily removable obstacle include a falling object, a vehicle having an accident and a dead animal body.

The display processing method of providing each of roads in a displayed map that is a map in a displayed range, with state information with regard to a road condition and of causing the road provided with the state information to be displayed in a display device. The display processing method includes (a) detecting a first abnormal section that is a road section having a road condition of a first abnormality and a second abnormal section that is a road section having the road condition of a second abnormality that is different from the first abnormality, based on vehicle information from a plurality of vehicles and (b) providing the first abnormal section with the state information in a first display mode and provide the second abnormal section with the state information in a second display mode that is different from the first display mode, out of the roads in the displayed map, and causing the first abnormal section and the second abnormal section provided with the state information to be displayed in the display device.

The display processing method according to this aspect of the present disclosure detects the first abnormal section that is the road section having the road condition of the first abnormality and the second abnormal section that is the road section having the road condition of the second abnormality that is different from the first abnormality, based on vehicle information from the plurality of vehicles. The display processing method then provides the first abnormal section with the state information in the first display mode and provide the second abnormal section with the state information in the second display mode that is different from the first display mode, out of the roads in the displayed map, and causes the first abnormal section and the second abnormal section provided with the state information to be displayed in the display device. This configuration enables a user (for example, a person in charge of a government office) to readily distinguish between the first abnormal section and the second abnormal section and to more readily design a maintenance plan (for example, a repair plan of the road surface) or the like according to the type of the abnormality of the road. In the description hereof, roads include not only public roads (roads and sidewalks) but private roads and parking places (for example, walkways).

The storage medium configured to store a program that causes a computer to serve as a display processing device configured to provide each of roads in a displayed map that is a map in a displayed range, with state information with regard to a road condition and to cause the road provided with the state information to be displayed in a display device. The program includes (a) detecting a first abnormal section that is a road section having a road condition of a first abnormality and a second abnormal section that is a road section having the road condition of a second abnormality that is different from the first abnormality, based on vehicle information from a plurality of vehicles; and (b) providing the first abnormal section with the state information in a first display mode and provide the second abnormal section with the state information in a second display mode that is different from the first display mode, out of the roads in the displayed map, and causing the first abnormal section and the second abnormal section provided with the state information to be displayed in the display device.

The storage medium according to this aspect of the present disclosure causes the computer to detect the first abnormal section that is the road section having the road condition of the first abnormality and the second abnormal section that is the road section having the road condition of the second abnormality that is different from the first abnormality, based on vehicle information from the plurality of vehicles. The storage medium then causes the computer to provide the first abnormal section with the state information in the first display mode and provide the second abnormal section with the state information in the second display mode that is different from the first display mode, out of the roads in the displayed map, and to display the first abnormal section and the second abnormal section provided with the state information in the display device. This configuration enables a user (for example, a person in charge of a government office) to readily distinguish between the first abnormal section and the second abnormal section and to more readily design a maintenance plan (for example, a repair plan of the road surface) or the like according to the type of the abnormality of the road. In the description hereof, roads include not only public roads (roads and sidewalks) but private roads and parking places (for example, walkways).

### Brief Description of Drawings

Fig. 1 is a configuration diagram illustrating the schematic configuration of a display system 10 according to one embodiment of the present disclosure.
Fig. 2 is a flowchart showing one example of a road condition estimating process performed by the road condition estimator 23.
Fig. 3 is a flowchart showing one example of a a sub-process performed by the road condition estimator 23.
Fig. 4 is a flowchart showing one example of a status image providing process performed by the display processor 24.
Fig. 5 is a diagram illustrating one example of a displayed image on the display 43.
Fig. 6 is a flowchart showing one example of a status image providing process of modified example.
Fig. 7 is a diagram illustrating one example of a displayed image on the display 43 of modified example.
Fig. 8 is a flowchart showing one example of a status image providing process of modified example.
Fig. 9 is a flowchart showing one example of a status image providing process of modified example.
Fig. 10 is a flowchart showing one example of a status image providing process of modified example.
Fig. 11 is a flowchart showing one example of a status image providing process of modified example.
Fig. 12 is a flowchart showing one example of a status image providing process of modified example.

### Description of Embodiments

The following describes some aspects of the disclosure with reference to embodiments.

### Embodiment

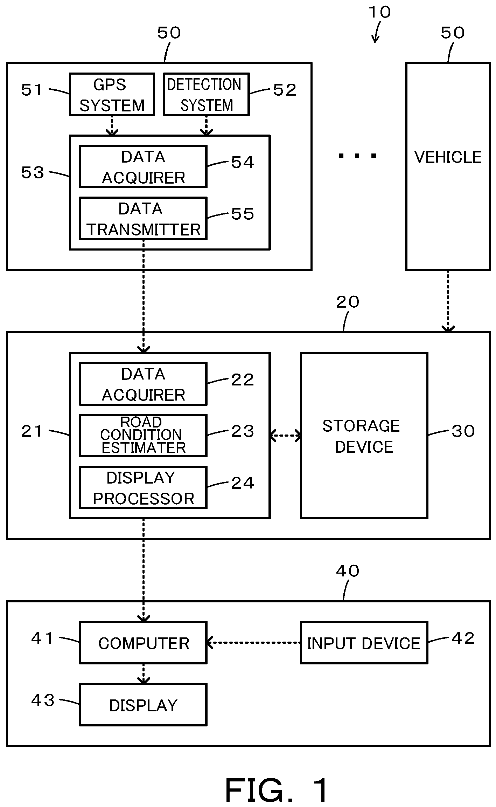

Fig. 1 is a configuration diagram illustrating the schematic configuration of a display system 10 according to one embodiment of the present disclosure. As illustrated, the display system 10 of the embodiment includes a server 20 that is configured to communicate with respective vehicles 50 wirelessly and that serves as the display processing device, and a terminal device 40 that is configured to communicate with the server 20 by wire or wirelessly. In the description below, roads include not only public roads (roads and sidewalks) but private roads and parking places (for example, walkways).

Each vehicle 50 includes a GPS system 51 configured to obtain location information with regard to the current location of the vehicle 50, a detection system 52 configured to detect behavior information with regard to the behavior of the vehicle 50, and an electronic control unit (hereafter referred to as "ECU") 53. The detection system 52 includes a sensor configured to detect information indicating the behavior of the vehicle 50, a sensor configured to detect information affecting the behavior of the vehicle 50, and a sensor configured to detect environmental information of the vehicle 50.

The information indicating the behavior of the vehicle 50 is, for example, at least one of a vehicle speed, a wheel speed, a longitudinal acceleration, a lateral acceleration, a yaw rate, a yaw angle, a roll angle, a pitch angle, and a tire slip ratio.

Examples of the information affecting the behavior of the vehicle 50 include an operating condition of an operation unit manipulatable by a driver and an operating condition of an assistant system for driving assistance of the vehicle 50. The operating condition of the operation unit is, for example, at least one of a steering angle and a steering speed of a steering wheel, a depression amount of an accelerator pedal, a depression amount of a brake pedal, a shift position of a shift lever and an operation or no operation of a direction indicator. The assistant system is, for example, at least one of a Lane Departure Alert (LDA) system, an Anti-lock Brake System (ABS), a TRaction control (TRC) system, and an Electronic Stability Control (ESC) system.

The sensor configured to detect the environmental information of the vehicle 50 is, for example, at least one of cameras, a radar and a LIDAR (Light Detection and Ranging).

The ECU 53 includes a CPU, a ROM, a RAM, a flash memory, input/ output ports and a communication port. This ECU 53 includes a data acquirer 54 and a data transmitter 55 as functional blocks provided by cooperation of the hardware configuration and the software configuration. The data acquirer 54 serves to obtain the location information of the vehicle 50 from the GPS system 51 and the behavior information of the vehicle 50 from the detection system 52. The data transmitter 55 serves to send the location information and the behavior information of the vehicle 50 obtained by the data acquirer 54, as vehicle information, to the server 20 wirelessly.

The server 20 includes an arithmetic processor 21 and a storage device 30. The arithmetic processor 21 includes a CPU, a ROM, a RAM, a flash memory, input/output ports and a communication port. This arithmetic processor 21 includes a data acquirer 22, a road condition estimator 23, and a display processor 24 as functional blocks provided by cooperation of the hardware configuration and the software configuration. The data acquirer 22, the road condition estimator 23 and the display processor 24 are respectively configured to transmit data to and from the storage device 30.

The data acquirer 22 serves to obtain the vehicle information from a plurality of the vehicles 50 wirelessly and store the obtained vehicle information into the storage device 30. The road condition estimator 23 serves to estimate the road condition of each road section, based on the vehicle information from the plurality of vehicles 50, to generate (or update) a road condition database by correlating each road section to the road condition and to store the generated (or updated) road condition database into the storage device 30. Each road section herein is set, for example, as a section of about several tens' centimeters to several meters. The display processor 24 serves to provide each road in a displayed map (a map in a displayed range) that is displayed on a display 43 of the terminal device 40, with a status image (state information) with regard to the road condition, based on map information and the road condition database and to send this data to a computer 41 of the terminal device 40 so as to be displayed on the display 43.

The storage device 30 is configured as, for example, a hard disk drive or an SSD (solid state drive). Various information required for the operations of the arithmetic processor 21 are stored in this storage device 30. The information stored in the storage device 30 include, for example, map information, vehicle information with regard to the plurality of vehicles 50 obtained by the data acquirer 22, and the road condition database generated by the road condition estimator 23.

The terminal device 40 is configured as, for example, a desktop personal computer, a notebook computer or a tablet terminal and includes a computer 41 and an input device 42 and a display 43 as a display device, which are connected with the computer 41. The computer 41 includes, for example, a CPU, a ROM, a RAM, a flash memory, a storage device (for example, a hard disk drive or an SSD), input/ output ports and a communication port. The input device used may be, for example, a mouse and a keyboard or a touch panel.

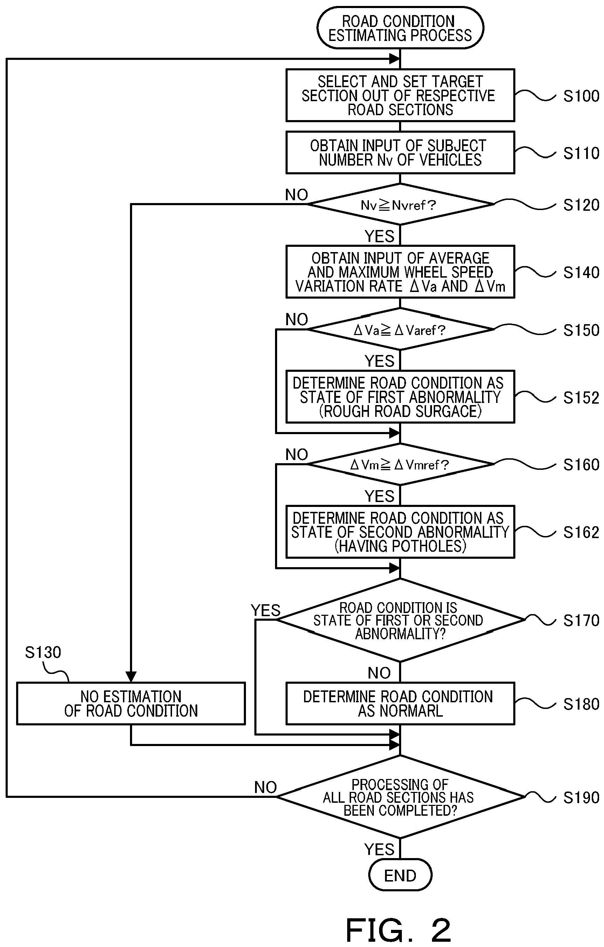

The following describes the operations of the server 20 of the embodiment having the configuration described above or more specifically the operations of the road condition estimator 23 and the display processor 24. The operations of the road condition estimator 23 are described first. Fig. 2 is a flowchart showing one example of a road condition estimating process performed by the road condition estimator 23. This routine is performed at regular intervals (for example, every day, every week or every month).

When the road condition estimating process of Fig. 2 is triggered, the road condition estimator 23 first selects one road section that has not yet been set as a target section, out of respective road sections of roads in an estimation requiring range where estimation of the road condition is required and sets the selected road section as a target section (step S100). The estimation requiring range is determined as a user's required range (for example, a prefectural range or a municipal range).

The road condition estimator 23 subsequently obtains the input of a number Nv of the vehicles 50 running in the target section during a target time period (hereinafter referred to as "subject number" Nv) (step S110). The target time period used is, for example, one day, one week or one month. This target time period may be identical with or different from the execution period of this routine. The subject number Nv input here is a calculated value (count value) based on the vehicle information from the plurality of vehicles 50 by a counting process (not shown). The counting process is appropriately performed by the road condition estimator 23.

The road condition estimator 23 subsequently compares the subject number Nv with a reference value Nvref (step S120) . The reference value Nvref is a threshold value used to determine whether the road condition of the target section is estimable with a certain level of accuracy and is, for example, about several to ten vehicles.

When it is determined at step S120 that the subject number Nv is less than the reference value Nvref, the road condition estimator 23 does not estimate the road condition of the target section (step S130) and determines whether all the road sections of the roads in the estimation requiring range have already been set as the target section (step S190) . When it is determined that there is any road section of the roads in the estimation requiring range that has not yet been set as the target section, the road condition estimator 23 returns the processing flow to step S100.

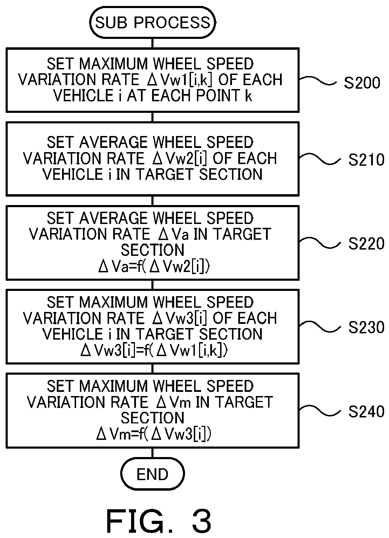

When it is determined at step S120 that the subject number Nv is equal to or greater than the reference value Nvref, on the other hand, the road condition estimator 23 subsequently obtain the inputs of an average wheel speed variation rate (a mean value of variations of the wheel speed per unit time) ΔVa and a maximum wheel speed variation rate (a maximum value of variations of the wheel speed per unit time) ΔVm in the target section of all the vehicles 50 running in the target section during the target time period (hereinafter referred to as "all subject vehicles") (step S140). The average wheel speed variation rate ΔVa and the maximum wheel speed variation rate ΔVm in the target section of all the subject vehicles input here are values set by a sub-process shown in Fig. 3. The sub-process of Fig. 3 is performed appropriately by the road condition estimator 23. The following describes the sub-process of Fig. 3 with interruption of the description of the road condition estimating process of Fig. 2.

When the sub-process of Fig. 3 is triggered, the road condition estimator 23 first sets a maximum wheel speed variation rate ΔVw1[i, k] (where i represents a variable assigned to each of the vehicles 50 and k represents a variable assigned to each point) at each point of the target section (minimal section) with regard to each of the vehicles 50 (respective vehicles 50) running in the target section during the target time period (hereinafter referred to as "each subject vehicle" or "respective subject vehicles") (step S200). More specifically, with regard to the vehicle 50 configured as a four-wheeled vehicle, the maximum wheel speed variation rate ΔVw1[i, k] set here is a maximum value out of respective wheel speed variation rates of a left front wheel, a right front wheel, a left rear wheel and a right rear wheel at each point of the target section. With regard to the vehicle 50 configured as a two-wheeled vehicle, the maximum wheel speed variation rate ΔVw1[i, k] set here is a maximum value out of respective wheel speed variation rates of a front wheel and a rear wheel at each point of the target section.

The road condition estimator 23 subsequently calculates an average wheel speed variation rate ΔVw2 [i] of each subject vehicle in the (entire) target section, based on the maximum wheel speed variation rates ΔVw1 [i, k] at the respective points of the target section (step S210) . The road condition estimator 23 then calculates an average wheel speed variation rate ΔVa of all the subject vehicles 50 in the target section, based on the average wheel speed variation rates ΔVw2 [i] of the respective subject vehicles in the target section (step S220) .

The road condition estimator 23 subsequently sets a maximum wheel speed variation rate ΔVw3[i] of each subject vehicle in the target section to a maximum value out of the maximum wheel speed variation rates ΔVw1 [i, k] of each subject vehicle at the respective points of the target section (step S230). The road condition estimator 23 then sets a maximum value out of the maximum wheel speed variation rates ΔVw3[i] of the respective subject vehicles in the target section, to a maximum wheel speed variation rate ΔVm of all the subject vehicles 50 in the target section (step S240) and terminates the sub-process of Fig. 3. The method employable to set the average wheel speed variation rate ΔVa and the maximum wheel speed variation rate ΔVm of all the subject vehicles 50 in the target section is, however, not limited to this method.

The following goes back to the description of the road condition estimating process of Fig. 2. After obtaining the inputs of the average wheel speed variation rate ΔVa and the maximum wheel speed variation rate ΔVm of all the subject vehicles 50 in the target section at step S140, the road condition estimator 23 subsequently compares the average wheel speed variation rate ΔVa of all the subject vehicles in the target section with a reference value ΔVaref (step S150) . The reference value ΔVaref is a threshold value used to determine whether the road condition of the target section is the state of a first abnormality, and is determined by experiments or by analyses. According to the embodiment, rough road surface (caving, ruts, cracks and separations) is specified as the first abnormality.

When the average wheel speed variation rate ΔVa of all the subject vehicles in the target section is equal to or higher than the reference value ΔVaref at step S150, the road condition estimator 23 determines (estimates) that the road condition of the target section is the state of the first abnormality (step S152). When this average wheel speed variation rate ΔVa is is lower than the reference value ΔVaref, on the other hand, the road condition estimator 23 does not perform the processing of step S152.

The following describes the reason of the processing of steps S150 and S152. When each vehicle 50 runs in a road section having the rough road surface, the rough road surface is likely to cause a variation in wheel speeds of the respective wheels of each vehicle 50 and is thereby likely to increase the wheel speed variation rate. By taking into account this, the process of the embodiment estimates that the road condition is the state of the first abnormality with regard to the road section where the average wheel speed variation rate ΔVa of all the subject vehicles in the target section is equal to or higher than the reference value ΔVaref.

The road condition estimator 23 subsequently compares the maximum wheel speed variation rate ΔVm of all the subject vehicles in the target section with a reference value ΔVmref that is larger than the reference value ΔVarf (step S160). The reference value ΔVmref is a threshold value used to determine whether the road condition of the target section is the state of a second abnormality, and is determined by experiments or by analyses. According to the embodiment, potholes (more localized concaves and convexes and more localized holes compared with the rough road surface) are specified as the second abnormality.

When the maximum wheel speed variation rate ΔVm of all the subject vehicles in the target section is equal to or higher than the reference value ΔVmref at step S160, the road condition estimator 23 determines (estimates) that the road condition of the target section is the state of the second abnormality (step S162). When the maximum wheel speed variation rate ΔVm is lower than the reference value ΔVmref, on the other hand, the road condition estimator 23 does not perform the processing of step S162.

The following describes the reason of the processing of steps S160 and S162. In general, potholes are sufficiently small relative to the road width and the vehicle width. When each vehicle 50 runs in a road section having potholes, it is expected that a certain proportion of the vehicles 50 are not affected by the potholes. Accordingly, using the average wheel speed variation rate ΔVa of all the subject vehicles in the target section is likely to fail to detect the presence of potholes, due to the wheel speed variation rates of the vehicles 50 that are not affected by the potholes. It is, on the other hand, expected that there is a sufficiently large difference between the wheel speed variation rates of the vehicles 50 that are affected by the potholes and the wheel speed variation rates of the vehicles 50 that are not affected by the potholes (a larger difference than a difference between the wheel speed variation rates of the vehicles 50 that are affected by the rough road surface other than the potholes and the wheel speed variation rates of the vehicles 50 that are not affected by the rough road surface). Accordingly, using the maximum wheel speed variation rate ΔVm of all the subject vehicles in the target section reflects the wheel speed variation rates of the vehicles 50 that are affected by the potholes and enables the presence of the potholes to be more appropriately detected.

The road condition estimator 23 subsequently determines whether the road condition of the target section is at least one of the state of the first abnormality and the state of the second abnormality (step S170). When it is determined that the road condition of the target section is neither the state of the first abnormality nor the state of the second abnormality, the road condition estimator 23 determines that the road condition of the target section is normal (step S180) . When it is determined that the road condition of the target section is at least one of the state of the first abnormality and the state of the second abnormality, on the other hand, the road condition estimator 23 does not perform the processing of step S180.

The road condition estimator 23 subsequently determines whether all the road sections of the roads in the estimation requiring range have already been set as the target section (step S190) . When it is determined that there is any road section of the roads in the estimation requiring range that has not yet been set as the target section, the road condition estimator 23 returns the processing flow to step S100.

When it is determined at step S190 that all the road sections of the roads in the estimation requiring range have already been set as the target section in the course of repetition of the processing of steps S100 to S190, the road condition estimator 23 terminates the road condition estimating process of Fig. 2. When the road condition estimating process is terminated, the road condition estimator 23 generates (updates) a road condition database showing the correlation of the road conditions to the road sections and stores the generated (updated) road condition database into the storage device 30.

Performing the road condition estimating process of Fig. 2 allows for detection of a normal section that is a road section having the normal road condition, a first abnormal section that is a road section having the road condition of the first abnormality (road section having the rough road surface), and a second abnormal section that is a road section having the road condition of the second abnormality (road section having the potholes), out of the respective road sections of the roads in the estimation requiring range. An overlapped abnormal section may be detected as a road section specified as both the first abnormal section and the second abnormal section.

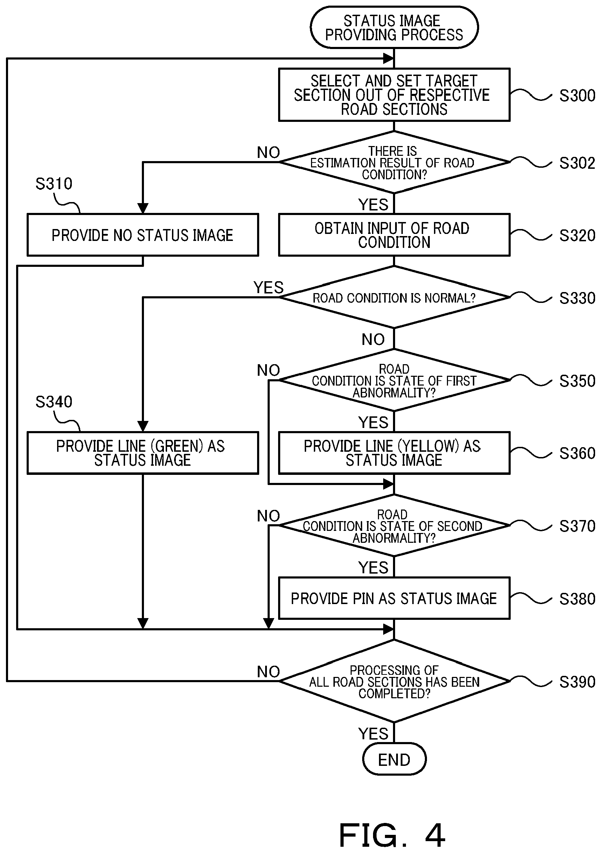

The following describes the operations of the display processor 24. Fig. 4 is a flowchart showing one example of a status image providing process performed by the display processor 24. This routine is performed to provide a displayed map (a map in a displayed range) on the display 43 in response to the user's operation of the input device 42. The displayed map is defined by the display scale and the user's desired displayed area and displayed district.

When the status image providing process of Fig. 4 is triggered, the display processor 24 first selects one road section that has not yet been set as a target section, out of respective road sections in the displayed map and sets the selected road section as a target section (step S300). The display processor 24 subsequently determines whether there is an estimation result of the road condition of the target section (step S302) . A concrete procedure of this determination checks the road condition database. When it is determined that there is no estimation result of the road condition of the target section, the display processor 24 does not provide the target section of the road in the displayed map with a status image (state information) with regard to the road condition (step S310) and determines whether all the road sections of the roads in the displayed map have already been set as the target section (step S390). When it is determined that there is any road section of the roads in the displayed map that has not yet been set as the target section, the display processor 24 returns the processing flow to step S300.

When it is determined at step S302 that there is an estimation result of the road condition of the target section, the display processor 24 obtains the input of the road condition of the target section (step S320) and determines whether the road condition of the target section is normal (step S330). When it is determined that the road condition of the target section is normal, the display processor 24 provides the target section of the road in the displayed map with a green line as the status image (step S340). The display processor 24 subsequently determines whether all the road sections of the roads in the displayed map have already been set as the target section (step S390) . When it is determined that there is any road section of the roads in the displayed map that has not yet been set as the target section, the display processor 24 returns the processing flow to step S300.

When it is determined at step S330 that the road condition of the target section is not normal, on the other hand, the display processor 24 subsequently determines whether the road condition of the target section is the state of the first abnormality (step S350) . When it is determined that the road condition of the target section is the state of the first abnormality, the display processor 24 provides the target section of the road in the displayed map with a yellow line as the status image (step S360). When it is determined that the road condition of the target section is not the state of the first abnormality, on the other hand, the display processor 24 does not perform the processing of step S360.

The display processor 24 subsequently determines whether the road condition of the target section is the state of the second abnormality (step S370). When it is determined that the road condition of the target section is the state of the second abnormality, the display processor 24 provides the target section of the road in the displayed map with a pin as the status image (step S380). When it is determined that the road condition of the target section is not the state of the second abnormality, on the other hand, the display processor 24 does not perform the processing of step S380.

The display processor 24 then determines whether all the road sections of the roads in the displayed map have already been set as the target section (step S390). When it is determined that there is any road section of the roads in the displayed map that has not yet been set as the target section, the display processor 24 returns the processing flow to step S300.

When it is determined at step S390 that all the road sections of the roads in the displayed map have already been set as the target section in the course of repetition of the processing of steps S300 to S390, the display processor 24 terminates the status image providing process of Fig. 4. While performing the status image providing process of Fig. 4 as described above, the display processor 24 sends the displayed map and the status images of the respective road sections to the computer 41 of the terminal device 40 to be displayed on the display 43.

Performing the status image providing process of Fig. 4 described above provides the normal section (road section having the normal road condition) out of the respective road sections of the roads in the displayed map with the green line as the status image, provides the first abnormal section (road section having the road condition of the first abnormality) with the yellow line as the status image, and provides the second abnormal section (road section having the road condition of the second abnormality) with the pin as the status image. The overlapped abnormal section (road section that is specified as both the first abnormal section and the second abnormal section) is provided with both the yellow line and the pin as the status images.

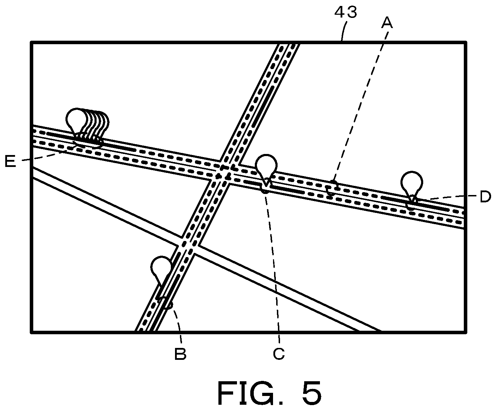

Fig. 5 is a diagram illustrating one example of a displayed image on the display 43. In the illustrated example of Fig. 5, each road section provided with a thick dotted line representing the green line (for example, an area A encircled by the broken line) indicates a normal section. Each road section provided with a thick solid line representing the yellow line (for example, an area B) indicates a first abnormal section. Each road section provided with a pin (for example, an area C) indicates a second abnormal section. Each road section provided with both a thick solid line and a pin (for example, an area D) indicates an overlapped abnormal section. A part having a high density of pins (for example, an area E) indicates the continuation of second abnormal sections. The displayed image like Fig. 5 on the display 43 enables a user (for example, a person in charge of a government office) to readily distinguish among the normal section, the first abnormal section (road section having the rough road surface) and the second abnormal section (road section having potholes). As a result, this configuration enables the user to readily design a maintenance plan (for example, a repair plan of the road surface) or the like according to the type of the abnormality of the road (the first abnormality or the second abnormality) . For example, as the maintenance plan, a long-term plan (for example, in the unit of months or in the unit of years) may be designed for the first abnormal section, and a short-term plan (for example, in the unit of days) may be designed for the second abnormal section.

The server 20 included in the display system 10 of the embodiment described above detects the normal sections, the first abnormal sections and the second abnormal sections out of the respective road sections of the roads in the estimation requiring range, based on the vehicle information from the plurality of vehicles 50. The server 20 provides the normal sections with the green line as the status image, the first abnormal sections with the yellow line as the status image, and the second abnormal sections with the pin as the status image, out of the respective road sections of the roads in the displayed map, and displays the respective road sections provided with the status images on the display 43. This configuration enables the user to readily distinguish among the normal section, the first abnormal section and the second abnormal section and also enables the user to, for example, readily design a maintenance plan according to the type of the abnormality of the road. The overlapped abnormal section is provided with the yellow line and the pin as the status images. This configuration enables the user to recognize the overlapped abnormal section. Additionally, no status image is given to a road section that is none of the normal section, the first abnormal section and the second abnormal section (road section that is not subjected to estimation of the road condition). This configuration enables the user to recognize the road section that is none of the normal section, the first abnormal section and the second abnormal section.

The server 20 included in the display system 10 of the embodiment also estimates the road condition of each road section out of the roads in the estimation requiring range, based on the vehicle information from the plurality of vehicles 50. This configuration allows such estimation to be performed more readily with the lower cost, compared with a configuration of using dedicated personnel and vehicles to estimate the road condition of each road section out of the roads in the estimation requiring range. Furthermore, with an increase in the number of vehicles 50 sending the vehicle information to the server 20, this server 20 can reduce the number of road sections where the number Nv of vehicles 50 running during the target time period is less than the reference value Nvref, i.e., the number of road sections that are not subjected to estimation of the road condition, out of the respective road sections of the roads in the estimation requiring range.

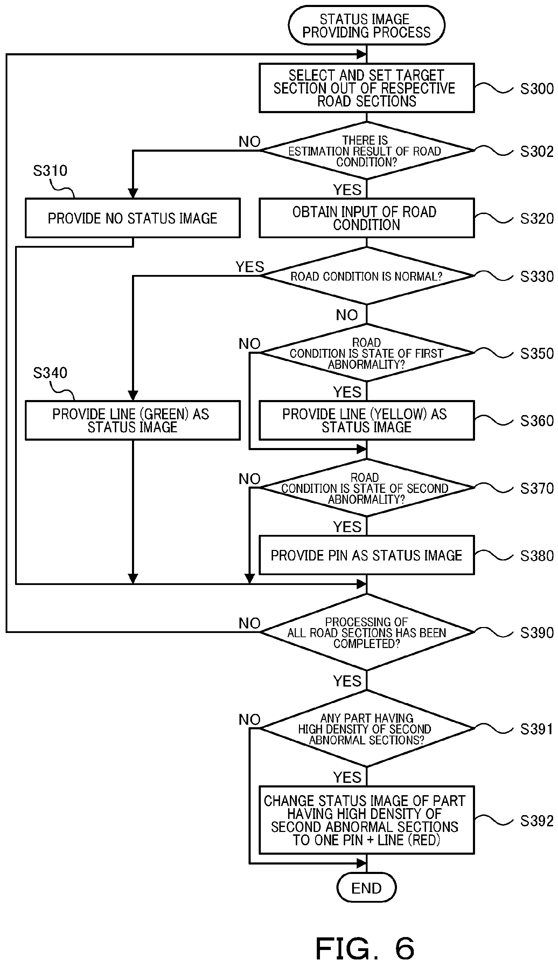

In the server 20 included in the display system 10 of the embodiment, the display processor 24 performs the status image providing process of Fig. 4. According to a modification, however, the display processor 24 may perform a status image providing process of Fig. 6 in place of the status image providing process of Fig. 4. The status image providing process of Fig. 6 is similar to the status image providing process of Fig. 4, except addition of the processing of steps S391 and S392. Accordingly, in order to avoid duplicated description, like steps in the status image providing process of Fig. 6 to those in the status image providing process of Fig. 4 are expressed by like step numbers and their detailed description is omitted.

In the status image providing process of Fig. 6, when it is determined at step S390 that all the road sections of the roads in the displayed map have already been set as the target section, the display processor 24 determines whether the roads in the displayed map have any part having a high density of the second abnormal sections (high density of pins as the status image) (step S391) . A concrete procedure of such determination may, for example, determine whether the roads in the displayed map have any part where the number of the second abnormal sections present in a predetermined distance L1 is larger than a predetermined number N1 or may determine whether the roads in the displayed map have any part where the number of the consecutive second abnormal sections is larger than a predetermined number N2. The predetermined distance L1, the predetermined number N1 and the predetermined number N2 are determined as such a distance and numbers that the high density of pins is expected to be the user's acceptable level (user's visually recognizable level). The predetermined distance L1 used may be a uniform distance or may be a longer distance in the scale of wider area. The predetermined value N1 and the predetermined value N2 used may be, for example, about 2 to 5. The predetermined value N1 and the predetermined value N2 may be identical values or may be different values.

When it is determined at step S391 that the roads in the displayed map have no part having the high density of the second abnormal sections (high density of pins as the status image), the display processor 24 terminates the status image providing process of Fig. 6. When it is determined that the roads in the displayed map have any part having the high density of the second abnormal sections (high density of pins as the status image), on the other hand, the display processor 24 changes the status image in this part from a plurality of pins to one pin along with a red line (step S392) and then terminates the status image providing process of Fig. 6.

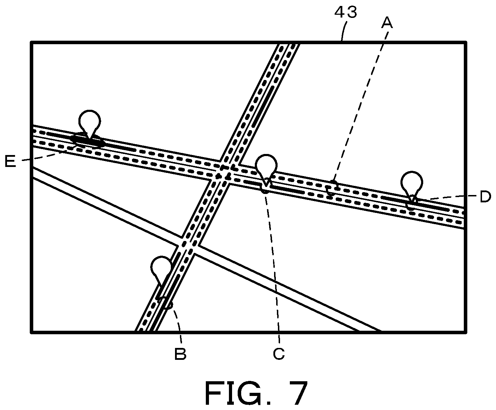

Fig. 7 is a diagram illustrating one example of the displayed image on the display 43 according to this modification. In the illustrated example of Fig. 7, the status image of the part having the high density of pins shown in Fig. 5 (for example, the area E shown in Fig. 5) is changed to one pin and a very thick solid line representing a red line. This causes the part having the high density of the second abnormality sections to be more readily recognizable.

According to this modification, the status image of the part having the high density of the second abnormal sections (high density of pins as the status image) out of the roads in the displayed map is changed from a plurality of pins to one pin along with a red line. This configuration is, however, not restrictive. For example, the status image may be changed to only a red line.

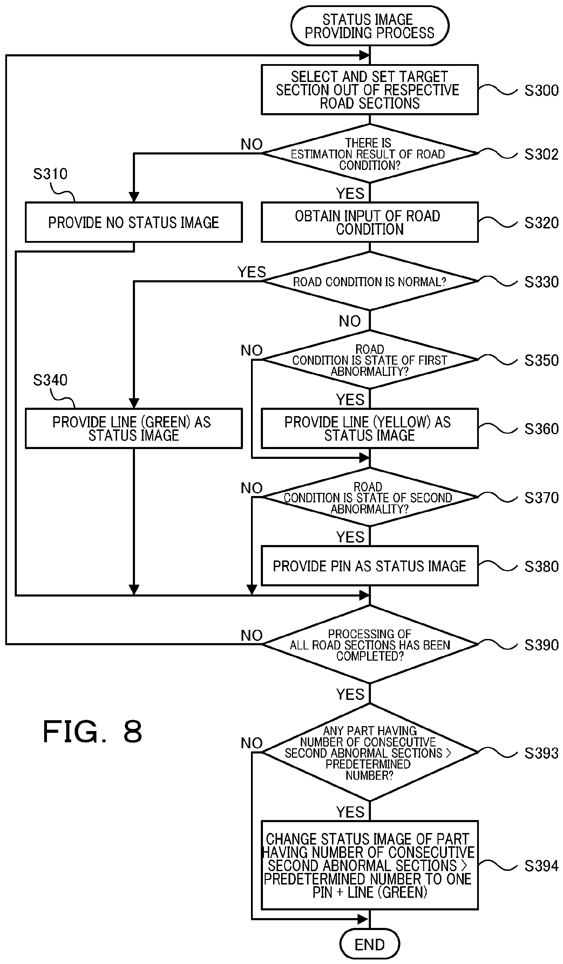

In the server 20 included in the display system 10 of the embodiment, the display processor 24 performs the status image providing process of Fig. 4. According to a modification, however, the display processor 24 may perform a status image providing process of Fig. 8 in place of the status image providing process of Fig. 4. The status image providing process of Fig. 8 is similar to the status image providing process of Fig. 4, except addition of the processing of steps S393 and S394. Accordingly, in order to avoid duplicated description, like steps in the status image providing process of Fig. 8 to those in the status image providing process of Fig. 4 are expressed by like step numbers and their detailed description is omitted.

In the status image providing process of Fig. 8, when it is determined at step S390 that all the road sections of the roads in the displayed map have already been set as the target section, the display processor 24 determines whether the roads in the displayed map have any part where the number of consecutive second abnormal sections is larger than a predetermined number N3 (step S393) . The predetermined number N3 is specified as the number of road sections corresponding to a distance that is repairable in a predetermined time period (for example, one day or two days) in the case where a short-term plan (for example, in the unit of days) is designed for the second abnormal sections (road sections having potholes) as a maintenance plan. The predetermined number N3 used may be, for example, about 2 to 5.

When it is determined at step S393 that the roads in the displayed map have no part where the number of consecutive second abnormal sections is larger than the predetermined number N3, the display processor 24 terminates the status image providing process of Fig. 8. When it is determined that the roads in the displayed map have any part where the number of consecutive second abnormal sections is larger than the predetermined number N3, on the other hand, the display processor 24 changes the status image in this part from a plurality of pins to one pin along with an orange line (step S394) and then terminates the status image providing process of Fig. 8. This provides a displayed image on the display 43 like the illustrated example of Fig. 7. This configuration enables the user to readily recognize whether a single second abnormal section or a plurality of consecutive second abnormal sections are repairable in the predetermined time period.

According to this modification, the display processor 24 changes the status image of the part where the number of consecutive second abnormal sections is larger than the predetermined number N3 out of the roads in the displayed map from a plurality of pins to one pin along with an orange line. This configuration is, however, not restrictive. For example, the status image may be changed to only an orange line.

In the server 20 included in the display system 10 of the embodiment, the display processor 24 provides the normal section out of the roads in the displayed map, with a green line as the status image. According to a modification, however, the display processor 24 may provide a part where the number of consecutive normal sections is larger than a predetermined number N4 out of the roads in the displayed map, with a green line along with one pin as the status image. The predetermined number N4 used may be, for example, about 2 to 5. According to another modification, the normal section out of the roads in the displayed map may not be provided with any status image (a display mode identical with that of road sections without estimation results of the road condition).

In the server 20 included in the display system 10 of the embodiment, the display processor 24 provides the first abnormal section out of the roads in the displayed map, with a yellow line as the status image. According to a modification, however, the display processor 24 may provide a part where the number of consecutive first abnormal sections is larger than a predetermined number N5 out of the roads in the displayed map, with a yellow line along with one pin as the status image. The predetermined number N5 used may be, for example, about 2 to 5.

In the server 20 included in the display system 10 of the embodiment, the display processor 24 provides the second abnormal section out of the roads in the displayed map, with a pin as the status image. According to a modification, the display processor 24 may provide the second abnormal section with a different color line from the color lines of the normal section and the first abnormal section, as the status image.

In the server 20 included in the display system 10 of the embodiment, the display processor 24 provides the overlapped abnormal section (road section that is specified as both the first abnormal section and the second abnormal section) out of the roads in the displayed map, with a yellow line of the first abnormal section and a pin of the second abnormal section, as the status image. According to a modification, the overlapped abnormal section may be provided with a different image from the yellow line and the pin, for example, a blue line as the status image. According to another modification, the overlapped abnormal section may be provided with only one of the yellow line and the pin as the status image.

In the server included in the display system 10 of the embodiment or the modification, the display processor 24 provides each road section out of the roads in the displayed map with a line such as a green line or a yellow line or with a pin according to the road condition. The color of the line and the color of the pin may be set arbitrarily. A detailed type of the road condition and the situation of maintenance may be added in the form of a letter or character string or a figure to the line or the pin. The detailed type of the road condition is, for example, caving, ruts, cracks or separation as the rough road surface. The situation of maintenance is, for example, construction not yet started; construction (repair) ordered; under construction; and completion of construction. The detailed type of the road condition may be set, for example, by the user (for example, a person in charge of a government office), based on the check results using a cruise car or based on reports from neighborhood inhabitants. The situation of the maintenance may be set, for example, by the user or a construction contractor.

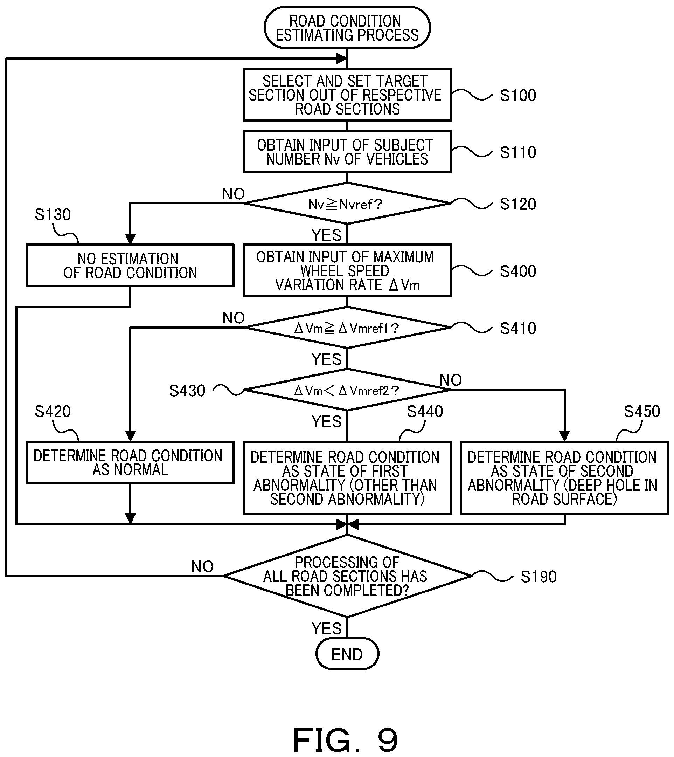

In the server 20 included in the display system 10 of the embodiment, the road condition estimator 23 performs the road condition estimating process of Fig. 2. According to a modification, the road condition estimator 23 may perform a road condition estimating process of Fig. 9, in place of the road condition estimating process of Fig. 2. The road condition estimating process of Fig. 9 is similar to the road condition estimating process of Fig. 2, except replacement of the processing of steps S140 to S180 with the processing of steps S400 to S450. Accordingly, in order to avoid duplicated description, like steps in the road condition estimating process of Fig. 9 to those in the road condition estimating process of Fig. 2 are expressed by like step numbers and their detailed description is omitted.

In the road condition estimating process of Fig. 9, when it is determined at step S120 that the subject number Nv is equal to or greater than the reference value Nvref, the road condition estimator 23 obtains the input of the maximum wheel speed variation rate ΔVm of all the subject vehicles in the target section (step S400) in a similar manner to the processing of step S140 in the road condition estimating process of Fig. 2.

The road condition estimator 23 subsequently compares the maximum wheel speed variation rate ΔVm of all the subject vehicles in the target section with a reference value ΔVmref1 (step S410) . The reference value ΔVmref1 is a threshold value used to determine whether the road condition of the target section is abnormal or not and is determined by experiments or by analyses. When the maximum wheel speed variation rate ΔVm of all the subject vehicles in the target section is lower than the reference value ΔVmref1, the road condition estimator 23 determines (estimates) that the road condition of the target section is normal (step S420) and proceeds to the processing of step S190 described above.

When it is determined at step S410 that the maximum wheel speed variation rate ΔVm of all the subject vehicles in the target section is equal to or higher than the reference value ΔVmref1, on the other hand, the road condition estimator 23 determines that the road condition of the target section is abnormal (either the state of a first abnormality or the state of a second abnormality). The road condition estimator 23 subsequently compares this maximum wheel speed variation rate ΔVm with a reference value ΔVmref2 that is larger than the reference value ΔVmref1 (step S430). The reference value ΔVmref2 is a threshold value used to determine whether the abnormality of the road condition of the target section is a first abnormality or a second abnormality and is determined by experiments or by analyses. According to this modification, the state of abnormality that a hole deeper than a predetermined depth is formed in the road surface is specified as second abnormality, and the state of abnormality other than the second abnormality is specified as first abnormality.

When it is determined at step S430 that the maximum wheel speed variation rate ΔVm of all the subject vehicles in the target section is lower than the reference value ΔVmref2, the road condition estimator 23 determines that the road condition of the target section is the state of the first abnormality (step S440) and then proceeds to step S190. When this maximum wheel speed variation rate ΔVm is equal to or higher than the reference value ΔVmref2, on the other hand, the road condition estimator 23 determines that the road condition of the target section is the state of the second abnormality (step S450) and then proceeds to step S190.

Performing the road condition estimating process of Fig. 9 allows for detection of a normal section, a first abnormal section, and a second abnormal section (road section having abnormality that a hole deeper than the predetermined depth is formed in the road surface), out of the respective road sections of the roads in the estimation requiring range. Performing the status image providing process of Fig. 3 or the like by the display processor 24 enables the user to readily distinguish among the normal section, the first abnormal section and the second abnormal section. As a result, this configuration enables the user to more readily design a maintenance plan according to the type of abnormality of the road (the first abnormality or the second abnormality).

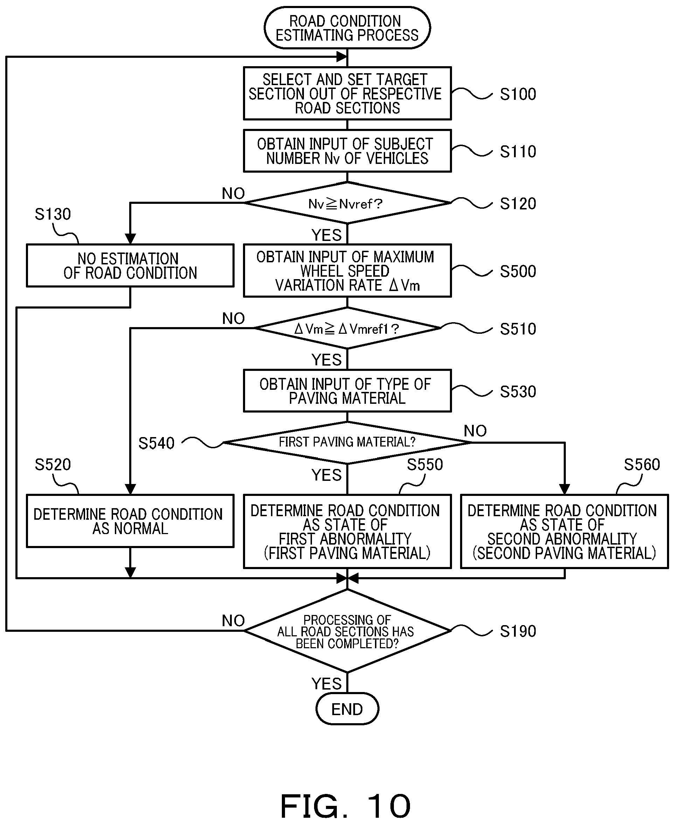

In the server 20 included in the display system 10 of the embodiment, the road condition estimator 23 performs the road condition estimating process of Fig. 2. According to a modification, the road condition estimator 23 may perform a road condition estimating process of Fig. 10, in place of the road condition estimating process of Fig. 2. The road condition estimating process of Fig. 10 is similar to the road condition estimating process of Fig. 2, except replacement of the processing of steps S140 to S180 with the processing of steps S500 to S560. Accordingly, in order to avoid duplicated description, like steps in the road condition estimating process of Fig. 10 to those in the road condition estimating process of Fig. 2 are expressed by like step numbers and their detailed description is omitted. In this modification, a paving material database showing a correlation of the type of the paving material of the road to each road section is also stored in the storage device 30.

In the road condition estimating process of Fig. 10, when it is determined at step S120 that the subject number Nv is equal to or greater than the reference value Nvref, the road condition estimator 23 obtains the input of the maximum wheel speed variation rate ΔVm of all the subject vehicles in the target section (step S500). The road condition estimator 23 subsequently compares the maximum wheel speed variation rate ΔVm of all the subject vehicles in the target section with a reference value ΔVmref1 (step S510). When this maximum wheel speed variation rate ΔVm is lower than the reference value ΔVmref1, the road condition estimator 23 determines (estimates) that the road condition of the target section is normal (step S520) and proceeds to the processing of step S190 described above. The processing of steps S500 to S520 is similarly performed to the processing of steps S400 to S420 in the road condition estimating process of Fig. 9.

When it is determined at step S510 that the maximum wheel speed variation rate ΔVm of all the subject vehicles in the target section is equal to or higher than the reference value ΔVmref1, on the other hand, the road condition estimator 23 determines that the road condition of the target section is abnormal (either the state of a first abnormality or the state of a second abnormality). The road condition estimator 23 subsequently obtains the input of the type of a paving material used for the road of the target section from the paving material database stored in the storage device 30 (step S530) and determines whether the paving material of the road of the target section is a first paving material or a second paving material (step S540). The processing of step S540 is a process of determining whether the abnormality of the road condition of the target section is a first abnormality or a second abnormality. According to this modification, the state of abnormality in a road section paved with the first paving material is specified as the first abnormality, and the state of abnormality in a road section paved with the second paving material different from the first paving material is specified as the second abnormality. The first paving material is a primarily used paving material, for example, asphalt, and the second paving material is a paving material other than the primarily used paving material, for example, concrete, sheet iron, stones or bricks.

When it is determined at step S540 that the paving material of the road of the target section is the first paving material, the road condition estimator 23 determines that the road condition of the target section is the state of the first abnormality (step S550) and then proceeds to step S190. When it is determined that the paving material of the road of the target section is the second paving material, on the other hand, the road condition estimator 23 determines that the road condition of the target section is the state of the second abnormality (step S560) and then proceeds to step S190.

Performing the road condition estimating process of Fig. 10 allows for detection of a normal section, a first abnormal section (road section that is paved with the first paving material and that is abnormal), and a second abnormal section (road section that is paved with the second paving material and that is abnormal), out of the respective road sections of the roads in the estimation requiring range. Performing the status image providing process of Fig. 3 or the like by the display processor 24 enables the user to readily distinguish among the normal section, the first abnormal section and the second abnormal section. As a result, this configuration enables the user to more readily design a maintenance plan according to the type of abnormality of the road (the first abnormality or the second abnormality).

In the server included in the display system 10 of the embodiment or the modification, the road condition estimator 23 performs the road condition estimating process of Fig. 2, Fig. 9 or Fig. 10 to estimate the road condition, based on the average wheel speed variation rate ΔVa and the maximum wheel speed variation rate ΔVm of the plurality of vehicles 50 with regard to each road section of the roads in the estimation requiring range. A modification may estimate the road condition, based on an average value and a maximum value of variations per unit time with regard to at least one of the vehicle speed, the longitudinal acceleration, the lateral acceleration, the yaw rate, the yaw angle, the roll angle, the pitch angle, and the tire slip ratio of the plurality of vehicles 50. A further modification may estimate the road condition, based on images taken by cameras of the plurality of vehicles 50. Additionally, the road condition may be estimated by any appropriate combination of these configurations.

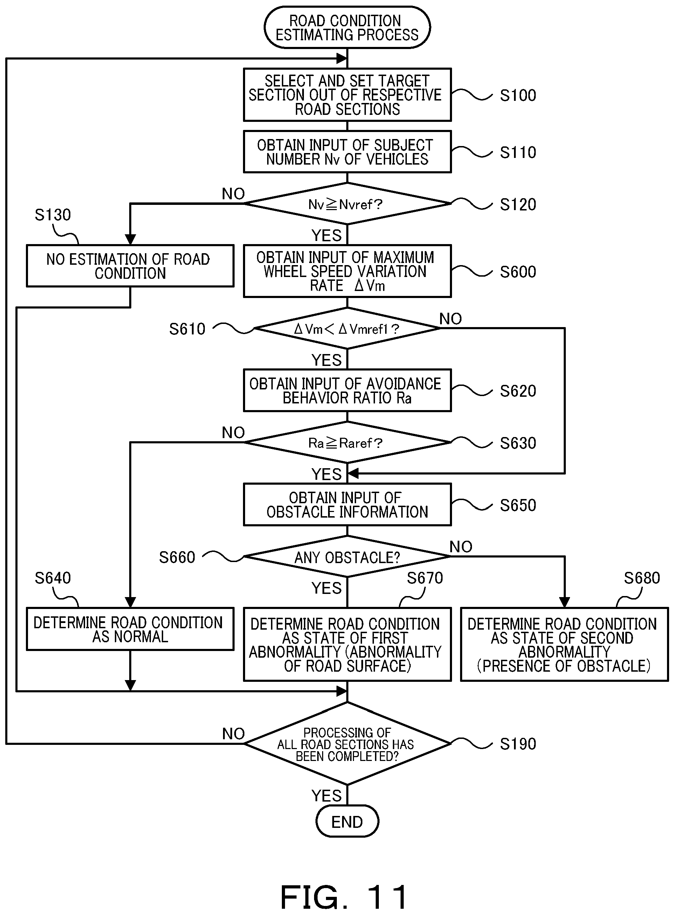

In the server 20 included in the display system 10 of the embodiment, the road condition estimator 23 performs the road condition estimating process of Fig. 2. According to a modification, the road condition estimator 23 may perform a road condition estimating process of Fig. 11, in place of the road condition estimating process of Fig. 2. The road condition estimating process of Fig. 11 is similar to the road condition estimating process of Fig. 2, except replacement of the processing of steps S140 to S180 with the processing of steps S600 to S680. Accordingly, in order to avoid duplicated description, like steps in the road condition estimating process of Fig. 11 to those in the road condition estimating process of Fig. 2 are expressed by like step numbers and their detailed description is omitted.

In the road condition estimating process of Fig. 11, when it is determined at step S120 that the subject number Nv is equal to or greater than the reference value Nvref, the road condition estimator 23 obtains the input of the maximum wheel speed variation rate ΔVm of all the subject vehicles in the target section (step S600). The road condition estimator 23 subsequently compares the maximum wheel speed variation rate ΔVm of all the subject vehicles in the target section with a reference value ΔVmref1 (step S610). The processing of steps S600 and S610 is similarly performed to the processing of steps S400 and S410 in the road condition estimating process of Fig. 9.

When it is determined at step S610 that the maximum wheel speed variation rate ΔVm of all the subject vehicles in the target section is lower than the reference value ΔVmref1, the road condition estimator 23 obtains the input of an avoidance behavior ratio Ra that is a ratio of the vehicles 50 which take an avoidance behavior in the target section to the subject number Nv (step S620). The vehicle 50 which takes an avoidance behavior in the target section means the vehicle 50 that starts an avoidance behavior in the target section or in a road section before the target section in the driving direction and that terminates the avoidance behavior in the target section or in a road section after the target section in the driving direction. Examples of the avoidance behavior include a behavior of the vehicle 50 to temporarily move from an original lane across the centerline of the road or a lane marking (or to change the lane) and to return to the original lane, a behavior of the vehicle 50 to move across the centerline of the road or a lane marking without any operation of a direction indicator and a behavior of the vehicle 50 to quickly decelerate or to suddenly stop. The determination of whether each vehicle 50 takes an avoidance behavior in the target section may be performed by using, for example, an average value and a maximum value of a variation per unit time of each vehicle 50 in the target section with regard to at least one of the vehicle speed, the wheel speed, the longitudinal acceleration, the lateral acceleration, the yaw rate, the yaw angle, the roll angle, the pitch angle, and the tire slip ratio or by using an image taken by a camera in the target section.

The road condition estimator 23 subsequently compares the avoidance behavior ratio Ra with a reference value Raref (step S630). Like the reference value ΔVmref1 used by the processing of step S610, the reference value Raref is a threshold value used to determine whether the road condition of the target section is abnormal or not and is determined by experiments or by analyses. When the avoidance behavior ratio Ra is lower than the reference value Raref, the road condition estimator 23 determines (estimates) that the road condition of the target section is normal (step S640) and proceeds to the processing of step S190 described above.

When it is determined at step S610 that the maximum wheel speed variation rate ΔVm of all the subject vehicles in the target section is equal to or higher than the reference value ΔVmref1 or when it is determined at step S630 that the avoidance behavior ratio Ra is equal to or higher than the reference value Raref, the road condition estimator 23 determines that the road condition of the target section is abnormal (either the state of a first abnormality or the state of a second abnormality) and obtains the input of obstacle information with regard to an obstacle of the target section (step S650). The obstacle information denotes information regarding the presence or the absence of an obstacle, and information specified by an obstacle specification process (not shown) is input here as the obstacle information. The obstacle specification process is performed appropriately by the road condition estimator 23. In the obstacle specification process, the road condition estimator 23 obtains the input of a plurality of taken images that are taken by the cameras of the respective vehicles 50 running in the target section, that are obtained as part of the vehicle information by the data acquirer 22 and that are stored in the storage device 30, and determines the presence or the absence of an obstacle, based on the plurality of input taken images. For example, a learned model generated by supervised learning may be used for determination of the presence or the absence of an obstacle.

The road condition estimator 23 subsequently determines whether there is an obstacle in the target section, based on the input obstacle information (step S660) . When it is determined that there is no obstacle in the target section, the road condition estimator 23 determines that the road condition of the target section is the state of a first abnormality (step S670) and then proceeds to step S190. When it is determined that there is an obstacle in the target section, on the other hand, the road condition estimator 23 determines that the road condition of the target section is the state of a second abnormality (step S680) and then proceeds to step S190. According to this modification, an abnormality of the road surface for example, rough road surface or potholes may be specified as the first abnormality, and an abnormality that an obstacle is present may be specified as the second abnormality.

Performing the road condition estimating process of Fig. 11 allows for detection of a normal section, a first abnormal section (road section having the abnormality of the road surface) and a second abnormal section (road section having the abnormality that an obstacle is present), out of the respective road sections of the roads in the estimation requiring range. Performing the status image providing process of Fig. 3 or the like by the display processor 24 enables the user to readily distinguish among the normal section, the first abnormal section and the second abnormal section. As a result, this configuration enables the user to more readily design a maintenance plan according to the type of abnormality of the road (the first abnormality or the second abnormality) .

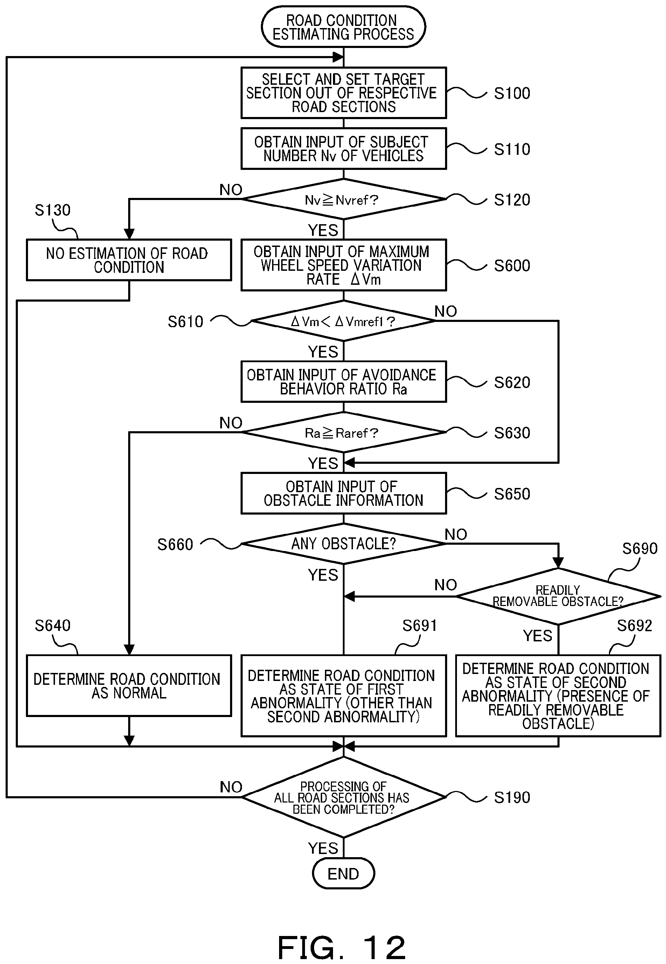

According to this modification, the road condition estimator 23 performs the road condition estimating process of Fig. 11. According to another modification, the road condition estimator 23 may perform a road condition estimating process of Fig. 12, in place of the road condition estimating process of Fig. 11. The road condition estimating process of Fig. 12 is similar to the road condition estimating process of Fig. 11, except replacement of the processing of steps S670 and S680 with the processing of steps S690 to S692. Accordingly, in order to avoid duplicated description, like steps in the road condition estimating process of Fig. 12 to those in the road condition estimating process of Fig. 11 are expressed by like step numbers and their detailed description is omitted. In this modification, the obstacle information obtained at step S650 includes not only information regarding the presence or the absence of an obstacle but information regarding the type of the obstacle.

In the road condition estimating process of Fig. 12, when it is determined at step S660 that there is an obstacle in the target section, the road condition estimator 23 determines whether the obstacle is a readily removable obstacle (step S690). The processing of step S690 is a process of determining whether the abnormality of the road condition of the target section is a first abnormality or a second abnormality, like the processing of step S660. According to this modification, an abnormality that there is a readily removable obstacle is specified as the second abnormality. Examples of the readily removable obstacle include a falling object, a vehicle having an accident and a dead animal body. An abnormality other than the second abnormality, for example, an abnormality without any obstacle (abnormality of the road surface) or an abnormality that an obstacle is present but is not readily removable is specified as the first abnormality. The obstacle that is not readily removable is, for example, a fallen rock.

When it is determined at step S660 that there is no obstacle in the target section or when it is determined at step S690 that the obstacle is not a readily removable obstacle, the road condition estimator 23 determines that the road condition of the target section is the state of the first abnormality (step S691) and then proceeds to step S190. When it is determined at step S690 that the obstacle is a readily removable obstacle, on the other hand, the road condition estimator 23 determines that the road condition of the target section is the state of the second abnormality (step S692) and then proceeds to step S190.

Performing the road condition estimating process of Fig. 12 allows for detection of a normal section, a first abnormal section, and a second abnormal section (road section having abnormality that there is a readily removable obstacle), out of the respective road sections of the roads in the estimation requiring range. Performing the status image providing process of Fig. 3 or the like by the display processor 24 enables the user to readily distinguish among the normal section, the first abnormal section and the second abnormal section. As a result, this configuration enables the user to more readily design a maintenance plan according to the type of abnormality of the road (the first abnormality or the second abnormality).

According to this modification, in the case where the road condition of the target section is abnormal (either the state of the first abnormality or the state of the second abnormality), when there is no obstacle in the target section or when an obstacle present in the target section is not readily removable, the road condition estimator 23 determines that the road condition of the target section is the state of the first abnormality. When an obstacle present in the target section is readily removable, on the other hand, the road condition estimator 23 determines that the road condition of the target section is the state of the second abnormality. According to another modification, when there is no obstacle in the target section or when an obstacle present in the target section is readily removable, the road condition estimator 23 may determine that the road condition of the target section is the state of the first abnormality. When an obstacle present in the target section is not readily removable, on the other hand, the road condition estimator 23 may determine that the road condition of the target section is the state of the second abnormality. According to a further modification, when an obstacle present in the target section is readily removable, the road condition estimator 23 may determine that the road condition of the target section is the state of a first abnormality. When an obstacle present in the target section is not readily removable, the road condition estimator 23 may determine that the road condition of the target section is the state of a second abnormality. When there is no obstacle in the target section, the road condition estimator 23 may determine that the road condition of the target section is the state of a third abnormality. According to this modification, the display processor 24 may provide a third abnormal section that is a road section having the road condition of the third abnormality, out of the respective road sections of the roads in the displayed map, with a different display mode (for example, a line or a pin of a different color) from those of a normal section, a first abnormal section and a second abnormal section, as the status image.

The above embodiment describes the application of the present disclosure to the configuration of the server 20 serving as the display processing device to provide respective roads in a displayed map with state information and display the respective roads provided with the state information on the display 43 of the terminal device 40 and the application of the present disclosure to the configuration of the display method of providing respective roads in a displayed map with state information and displaying the respective roads provided with the state information on the display 43 of the terminal device 40. The present disclosure may also be applied to the configuration of a storage medium to store a program that causes the server 20 to serve as the display processing device.

The following describes the correspondence relationship between the primary components of the embodiment and the primary components of the disclosure described in Summary. The road condition estimator 23 of the embodiment corresponds to the "road condition detector" and the display processor 24 of the embodiment corresponds to the "display processor".

The correspondence relationship between the primary components of the embodiment and the primary components of the disclosure, regarding which the problem is described in Summary, should not be considered to limit the components of the disclosure, regarding which the problem is described in Summary, since the embodiment is only illustrative to specifically describes the aspects of the disclosure, regarding which the problem is described in Summary. In other words, the disclosure, regarding which the problem is described in Summary, should be interpreted on the basis of the description in the Summary, and the embodiment is only a specific example of the disclosure, regarding which the problem is described in Summary.

The aspect of the disclosure is described above with reference to the embodiment. The disclosure is, however, not limited to the above embodiment but various modifications and variations may be made to the embodiment without departing from the scope of the disclosure.

### Industrial Applicability

The technique of the disclosure is preferably applicable to the manufacturing industries of the display processing device and so on.

## Claims

1. A display processing device (20) configured to provide each of roads in a displayed map that is a map in a displayed range, with state information with regard to a road condition and to cause the road provided with the state information to be displayed in a display device (43),
the display processing device (20) comprising:
a road condition detector (23) configured to detect a first abnormal section that is a road section having a road condition of a first abnormality and a second abnormal section that is a road section having the road condition of a second abnormality that is different from the first abnormality, based on vehicle information from a plurality of vehicles; and
a display processor (24) configured to provide the first abnormal section with the state information in a first display mode and provide the second abnormal section with the state information in a second display mode that is different from the first display mode, out of the roads in the displayed map and to cause the first abnormal section and the second abnormal section provided with the state information to be displayed in the display device (43).

2. The display processing device (20) according to claim 1,
wherein the display processor (24) provides a part where a number of the second abnormal sections present in a predetermined distance is larger than a first predetermined number or a part where a number of consecutive second abnormal sections is larger than a second predetermined number, with the state information in a third display mode that is different from the first display mode and the second display mode, out of the roads in the displayed map and to cause either of the parts provided with the state information to be displayed in the display device (43).

3. The display processing device (20) according to either claim 1 or 2,
wherein the road condition detector (23) detects a normal section that is a road section having a normal road condition, based on the vehicle information, and
the display processor (24) provides the normal section with the state information in a fourth display mode that is different from the first display mode and the second display mode, out of the roads in the displayed map and to cause the normal section provided with the state information to be displayed in the display device (43).

4. The display processing device (20) according to any one of claim 1 to 3,
wherein the display processor (24) provides an overlapped abnormal section that is a road section specified as both the first abnormal section and the second abnormal section, with the state information in the first display mode and the second display mode or in a fifth display mode that is different from the first display mode and the second display mode, out of the roads in the displayed map and to cause the overlapped abnormal section provided with the state information to be displayed in the display device (43).

5. The display processing device (20) according to any one of claim 1 to 4,
wherein the first abnormality is a rough road surface, and
the second abnormality is a pothole.

6. The display processing device (20) according to any one of claim 1 to 4,
wherein the second abnormality is an abnormality that a hole deeper than a predetermined depth is formed in a road surface.

7. The display processing device (20) according to any one of claim 1 to 4,
wherein the first abnormality is an abnormality in a road section that is paved with a first paving material, and
the second abnormality is an abnormality in a road section that is paved with a second paving material that is different from the first paving material.

8. The display processing device (20) according to any one of claim 1 to 4,
wherein the first abnormality is an abnormality of a road surface, and
the second abnormality is an abnormality that an obstacle is present.

9. The display processing device (20) according to any one of claim 1 to 4,
wherein the second abnormality is an abnormality that a readily removable obstacle is present.

10. A display processing method of providing each of roads in a displayed map that is a map in a displayed range, with state information with regard to a road condition and of causing the road provided with the state information to be displayed in a display device (43),
the display processing method comprising:
(a) detecting a first abnormal section that is a road section having a road condition of a first abnormality and a second abnormal section that is a road section having the road condition of a second abnormality that is different from the first abnormality, based on vehicle information from a plurality of vehicles; and
(b) providing the first abnormal section with the state information in a first display mode and provide the second abnormal section with the state information in a second display mode that is different from the first display mode, out of the roads in the displayed map, and causing the first abnormal section and the second abnormal section provided with the state information to be displayed in the display device (43).

11. A storage medium configured to store a program that causes a computer to serve as a display processing device (20) configured to provide each of roads in a displayed map that is a map in a displayed range, with state information with regard to a road condition and to cause the road provided with the state information to be displayed in a display device (43),
the program comprising:
(a) detecting a first abnormal section that is a road section having a road condition of a first abnormality and a second abnormal section that is a road section having the road condition of a second abnormality that is different from the first abnormality, based on vehicle information from a plurality of vehicles; and
(b) providing the first abnormal section with the state information in a first display mode and provide the second abnormal section with the state information in a second display mode that is different from the first display mode, out of the roads in the displayed map, and causing the first abnormal section and the second abnormal section provided with the state information to be displayed in the display device (43).
